# EUROPEAN PATENT APPLICATION

(11) **EP 1 404 099 A1**
(43) Date of publication of application: **31.03.2004**
(21) Application number: 02733288.1
(22) Date of filing: 04.06.2002
(51) Int. Cl.: H04M 11/00, H04M 3/00, H04L 12/66

(54) **INTERNET TELEPHONE APPARATUS AND INTERNET TELEPHONE SYSTEM**

(30) Priority: 04.06.2001 JP 2001168586
(71) Applicant: SHARP KABUSHIKI KAISHA, Osaka 545-8522 (JP)
(72) Inventor: KISHIDA, Hiroyuki, Osaka-shi, Osaka 545-0021 (JP)
(74) Representative: Müller, Frithjof E., Dipl.-Ing.
(86) International application number: PCT/JP2002/005497
(87) International publication number: WO 2002/100083

(57) **Abstract**

An object of the invention is to provide an Internet telephone apparatus having a function of an analog telephone that do not require an installation space and are convenient in use. The Internet telephone apparatus (1) transmits/receives an analog signal for an analog telephone and a digital signal for an Internet telephone to/from a telephone line (13) connected to a gateway (12). A controller (7) switches between a digital line controlling portion (2) and an analog line controlling portion (3) so as to switch a function of the Internet telephone and that of the analog telephone. A user can perform telephone communication by the same operation of a handset (11) and an operation panel (8) for the Internet telephone and the analog telephone. When the Internet telephone communication is performed, a pseudo tone indicating a line status is generated from a pseudo-line-signal generating portion (17) and it is notified of the user.

## Description

### Technical Field

The present invention relates to an Internet telephone apparatus and an Internet telephone system that can perform telephone communications via the Internet and also can perform analog telephone communications via a public telephone line network.

### Background Art

Conventionally, analog telephone communications via a public telephone line network has been spread widely. With a recent rapid development of the Internet, it is becoming possible to perform telephone communications via the Internet. Internet telephone communications can be performed basically with communication terminal equipment that performs Internet communications, such as a workstation or a personal computer. Japanese Unexamined Patent Publication JP-A 11-215267 and Japanese Unexamined Patent Publication JP-A 2000-324240 disclose conventional techniques that allow Internet telephone communications by connecting an analog telephone apparatus for analog telephone communications to the Internet line via an adaptor.

Moreover, HomePNA (Home Phoneline Networking Alliance) is proposed, in which the telephone lines laid in houses are utilized as communication lines constituting LAN (Local Area Network), and this utilization is being spread. HomePNA is outlined in pp. 112 to 119 of "Interface" September, 2000 published by CQ Publishing Co. Ltd., for example.

In the household network environment utilizing HomePNA or the like, an analog telephone apparatus connected to a conventional public telephone line network and an Internet telephone apparatus connected to the Internet with ADSL (Asymmetric Digital Subscriber Line) or the like can be connected to a common telephone line. However, the analog telephone apparatus and the Internet telephone apparatus are independent and discrete apparatuses, and the common telephone line is used in two ways by changing the frequency band of signals to be used. In other words, the analog telephone apparatus performs with analog signals and uses a frequency band for speech communications of up to about 4 kHz, which is conventionally used, and the Internet telephone apparatus performs communications by digital signals and uses a frequency band for data communications of several hundreds kHz or more. Therefore, even if the conventional analog telephone apparatus is connected to the telephone line forming the HomePNA, the analog telephone apparatus cannot be connected to a household network. The analog telephone apparatus can be connected to the household network and used as an Internet telephone apparatus by being connected via an adaptor or the like.

When an Internet telephone is to be utilized, the telephone number is also changed from a number of a conventional analog telephone number and a call has to be answered with different telephone apparatuses depending on the type of the incoming call. Therefore, both an analog telephone apparatus and an Internet telephone apparatus are provided, and it is necessary to select one of the two apparatuses to be used. Furthermore, an installation space for two apparatuses is necessary, which is not convenient.

In particular, when an Internet telephone apparatus is provided anew, in addition to an analog telephone apparatus that has been conventionally used, the analog telephone apparatus and the Internet telephone apparatus are separate apparatuses, so that operation procedures or the like are different from each other, which is complicated. This kind of inconvenience can be solved to some extent, when a combination of an adaptor and an analog telephone apparatus of the same type as the analog telephone apparatus is used for the Internet telephone apparatus. However, when there are a plurality of telephone apparatuses of the same type, it may be difficult to determine which apparatus should be answered, for example, at the time when a call has arrived. When a telephone apparatus is provided with a function for storing telephone numbers, call history or the like, it is necessary to check or register data for each telephone apparatus.

### Disclosure of Invention

An object of the invention is to provide an Internet telephone apparatus and an Internet telephone system that do not require an installation space and are convenient in use.

The invention provides an Internet telephone apparatus capable of telephone communications via an Internet line laid utilizing an Internet, comprising:
telephone operating means for receiving an input operation at a time of telephone communications;
telephone processing means for processing a voice signal for telephone communications;
analog telephone means for sending and receiving the voice signal processed by the telephone processing means in a form of an analog signal to an analog line in order to perform telephone communications via the analog line laid in a public telephone line network according to an input operation to the telephone operating means;
Internet telephone means for converting the voice signal processed by the telephone processing means to a digital signal of a predetermined form and sending and receiving the digital signal to an Internet line in order to perform telephone communications via the Internet line according to an input operation to the telephone operating means; and
line selecting means for selecting a line type between the analog line and the Internet line, and selecting the analog telephone means or the Internet telephone means according to the selected line type.

According to the invention, an Internet telephone apparatus capable of telephone communications via an Internet line laid utilizing the Internet comprises telephone operating means, telephone processing means, analog telephone means, Internet telephone means and line selecting means. The analog telephone means sends out and receives the voice signal processed by the telephone processing means in the form of an analog signal to an analog line in order to perform telephone communications via the analog line laid in a public telephone line network according to an input operation to the telephone operating means. The Internet telephone means sends out and receives the voice signal processed by the telephone processing means that has been converted to a digital signal of a predetermined form to an Internet line in order to perform telephone communications via the Internet line according to an input operation to the telephone operating means. The user of the Internet telephone apparatus can perform telephone communications using the same telephone apparatus, whether the Internet line is utilized or the analog line is utilized. Therefore, only a small installation space is required, and a common operation for placing a call can be performed to the telephone operating means, and a single telephone apparatus is to be responded to at the time when a call has arrived. This results in good convenience in use.

The invention is characterized in that the line selecting means selects either the analog line or the Internet line in the selection of the line type in accordance with a calling destination and the line status.

According to the invention, the line selecting means selects the line type in accordance with the calling destination and the line status, and performs telephone communications with the selected line, so that the user of the Internet telephone apparatus can perform telephone communications on an appropriate line type without directly selecting the line type.

Furthermore, the invention is characterized by further comprising selection-line-notifying means for notifying a user of a line type selected by the line selecting means.

According to the invention, the line type selected by the line selecting means is notified so that the user can know easily which of the lines is in use for telephone communications.

Furthermore, the invention is characterized by further comprising targeted-party-registering means for registering previously targeted party for telephone communications separately for the Internet line and the analog line, and is characterized in that the line selecting means selects either the analog line or the Internet line in the selection of the line type based on the input operation to the telephone operating means at a time of placing a call, and can select a targeted party corresponding to the selected line type from the previously registered targeted party in the targeted-party-registering means.

According to the invention, when the line type is selected by the line selecting means, a targeted party previously registered in the targeted-party-registering means can be selected in accordance with the selected line type, so that the user can select easily a targeted party with whom telephone communications are possible in accordance with the line type.

Furthermore, the invention is characterized in that the line selecting means selects such that the analog telephone means responds to an incoming call from the analog line, and the Internet telephone means responds to an incoming call from the Internet line.

According to the invention, when a call has arrived from the analog line, the call is responded to by the analog telephone means, and when a call has arrived from the Internet line, the call is responded to by the Internet telephone means. Therefore, an appropriate response can be performed in accordance with the line type in which a call has arrived.

Furthermore, the invention is characterized by further comprising incoming-call-line notifying means for determining whether a call receiving request has come from the analog line or the Internet line at a time when a call has arrived, and notifying a user of a result.

According to the invention, the incoming-call-line notifying means notifies whether a call receiving request has come from the analog line or the Internet line, and therefore the user can know easily which line had a call receiving request.

Furthermore, the invention is characterized by further comprising means for notifying an incoming call during talking on the analog telephone that can receive a call that has arrived from the Internet line during talking via the analog line with the analog telephone means and that, if a call has arrived, notifies the user of the call.

According to the invention, even during communications via the analog telephone, when an Internet telephone call has arrived, the user is notified by the means for notifying an incoming call during talking on the analog telephone, so that the user can know easily that the user is wanted by the Internet telephone.

Furthermore, the invention is characterized by further comprising means for notifying an incoming call during talking on the Internet telephone that can receive a call that has arrived from the analog line or the Internet line during talking via the Internet line with the Internet telephone means and that, if a call has arrived, notifies the user of the call.

According to the invention, even if during communications via the Internet telephone, when an analog telephone call or another Internet telephone call has arrived, the user is notified by the means for notifying an incoming call during talking on the Internet telephone, so that the user can know easily that the user is wanted by the analog telephone or the Internet telephone.

Furthermore, the invention is characterized by further comprising incoming-call-detecting means for detecting another incoming call during talking on a phone, and is characterized in that the line selecting means selects the line type such that when the incoming-call-detecting means detects another incoming call, the incoming call is responded to.

According to the invention, another incoming call can be detected by the incoming-call-detecting means, and the line selecting means selects the line type such that the incoming call is responded to. Therefore, a large number of calls for telephone communications can be performed without imposing operation burden on the user.

The invention is characterized in that the line selecting means selects the analog telephone means and the Internet telephone means or the Internet telephone means so that the Internet telephone apparatus can be connected to a plurality of lines at the same time.

According to the invention, the Internet telephone means utilizes a frequency band higher and wider than that of an analog signal used by the analog telephone means to process sounds as packet data. Therefore, in addition to analog telephone communications, telephone communications with a plurality of lines can be performed. The apparatus can be connected to a plurality of lines at the same time, using only the Internet telephone means or the Internet telephone means and the analog telephone means, so that simultaneous telephone communications with a plurality of targeted party can be performed.

Furthermore, the invention is characterized in that the analog telephone means and the Internet telephone selecting means can connect the plurality of lines each other to which the Internet telephone apparatus can be connected.

According to the invention, the plurality of lines are connected to each other, so that for example, a slave apparatus is connected, and a master apparatus and the slave apparatus can perform telephone communications with different targeted party at the same time.

Furthermore, the invention is characterized by further comprising frequency separating means for separating signals from ADSL (Asymmetric Digital Subscriber Line) into a signal of a frequency band for speech communications and a signal of a frequency band for data communications depending on the frequency band, and
an ADSL modem for modulating a digital signal to be sent to a signal of a frequency band for data communications, and demodulating the signal of the frequency band for data communications separated by the frequency separating means to a digital signal.

According to the invention, the frequency separating means and the ADSL modem are provided in the Internet telephone apparatus. Therefore, when no other communication equipment is provided in the house, the Internet telephone apparatus can be connected to the telephone line in the same manner as in the analog telephone apparatus by including the frequency separating means and the ADSL modem in the telephone apparatus. Thus, connection can be simplified.

Furthermore, the invention is characterized by further comprising pseudo-line signal generating means for generating a ringing signal and generating a pseudo tone or signal for notifying an operator of a line status when being used as an Internet telephone.

According to the invention, the Internet telephone apparatus further comprises pseudo-line signal generating means for generating a ringing signal and generating a pseudo-tone or signal for notifying an operator of a line status when being used as an Internet telephone, so that when the Internet telephone is used, the operator can know the line status with the same sound as in the case of the analog telephone.

Furthermore, the invention is characterized in that the line selecting means instructs the pseudo-line signal generating means to generate a pseudo-dial tone when a normal connection to an Internet telephone service provider is established.

According to the invention, the pseudo-line signal generating means generates a pseudo-dial tone when a normal connection to an Internet telephone service provider is established, and therefore the operator can know by the pseudo-dial tone that a call can be sent.

Furthermore, the invention is characterized in that the line selecting means instructs the pseudo-line signal generating means to generate a pseudo-busy tone when a connection to an Internet telephone service provider cannot be established.

According to the invention, the pseudo-line signal generating means generates a pseudo-busy tone when a connection to an Internet telephone service provider cannot be established, and therefore the operator can know by the pseudo-busy tone that a call cannot be sent.

Furthermore, the invention is characterized in that the line selecting means instructs the pseudo-line signal generating means to generate a sound indicating impossibility of sending a call when a connection to an Internet telephone service provider cannot be established.

According to the invention, the pseudo-line signal generating means generates a sound indicating impossibility of sending a call, such as another sound signal or a synthesized sound, instead of a pseudo-busy tone, when a connection to an Internet telephone service provider cannot be established, and therefore the operator can know by the sound indicating impossibility of sending a call that a call cannot be sent.

Furthermore, the invention is characterized in that the line selecting means instructs the pseudo-line signal generating means to generate a pseudo-ring back tone while a telephone of a targeted party is ringing.

According to the invention, the pseudo-line signal generating means generates a pseudo-ring back tone while a telephone of a targeted party is ringing, and therefore the operator can know by the pseudo-ring back tone that the telephone of the targeted party is ringing.

Furthermore, the invention is characterized in that the line selecting means instructs the pseudo-line signal generating means to stop generating a pseudo-ring back tone when a telephone of a targeted party is answered.

According to the invention, the pseudo-line signal generating means stops generating a pseudo-ring back tone when a telephone of a targeted party is answered, and therefore the operator can know by the stop of the pseudo-ring back tone that the telephone of the targeted party is answered.

Furthermore, the invention is characterized by further comprising wireless control means connected to one or a plurality of slave apparatuses via wireless waves, and is characterized in that the telephone processing means is provided with a path for communications via the telephone operating means and a path in a number equal to the number of the slave apparatus for communications from the slave apparatus via the wireless control means.

According to the invention, the telephone processing means is provided with a path for communications via the telephone operating means and a path in a number equal to the number of the slave apparatus for communications from the slave apparatus via the wireless control means, and therefore the Internet telephone apparatus and the slave apparatus can perform telephone communications simultaneously with different targeted party.

Furthermore, the invention provides an Internet telephone system comprising:
any one of the above-described Internet telephone apparatuses, and
an Internet network in which an Internet line is laid and that has an Internet telephone service provider for providing database necessary for Internet telephone communications, and is characterized in that
the Internet telephone means of the Internet telephone apparatus performs Internet telephone communications based on the database provided by the Internet telephone service provider.

According to the invention, Internet telephone communications can be performed with the Internet telephone apparatus in which the operation for Internet telephone communications can perform to the telephone operating means also used for the operation for analog telephone communications to via the Internet line laid in the Internet network. The database necessary for Internet telephone communications are provided by an Internet service provider, and therefore the Internet telephone means of the Internet telephone apparatus can perform telephone communications via the Internet line efficiently, which may reduce the communication cost.

Furthermore, the invention is characterized in that the Internet telephone apparatus is connected to the Internet network via a public telephone line network.

According to the invention, when the Internet telephone apparatus is connected to a subscriber line from the public telephone line network, the Internet line can be utilized via the public telephone line network. Alternatively, only public telephone line network can be utilized for analog telephone communications as the analog line.

Furthermore, the invention is characterized in that the Internet telephone apparatus is connected to the Internet network via a data communication network.

According to the invention, since the Internet telephone apparatus is connected to the Internet network via a data communication network, services provided by the Internet network can be utilized efficiently for Internet telephone communications.

Furthermore, the invention is characterized in that a plurality of Internet telephone relay stations that are responsible for respective regions and relay telephone communications via the Internet line to the public telephone line network are provided in the Internet network,
the Internet telephone service provider provides data for selecting the Internet telephone relay stations at the time of telephone communications via the Internet line in the form of the database, and
the Internet telephone means of the Internet telephone apparatus selects the Internet telephone relay stations corresponding to a targeted party with reference to the database provided by the Internet telephone service provider, and performs Internet telephone communications via the selected Internet telephone relay station.

According to the invention, an Internet telephone relay station is selected with reference to the database provided by an Internet telephone service provider and a targeted party is called from the public telephone line network via the selected Internet telephone relay station for telephone communications.

### Brief Description of Drawings

Other and further objects, features, and advantages of the invention will be more explicit from the following detailed description taken with reference to the drawings wherein:
Fig. 1 is a block diagram showing a schematic electrical configuration of an Internet telephone apparatus according to one embodiment of the invention;
Fig. 2 is a block diagram showing an example of a system configuration of a household network to which the Internet telephone apparatus of Fig. 1 is connected;
Fig. 3 is a block diagram showing another example of a system configuration of a household network to which the Internet telephone apparatus of Fig. 1 is connected;
Fig. 4 is a block diagram showing yet another example of a system configuration of a household network to which the Internet telephone apparatus of Fig. 1 is connected;
Fig. 5 is a block diagram showing a schematic electrical configuration of an Internet telephone apparatus according to another embodiment of the invention;
Fig. 6 is a block diagram showing an example of a system configuration of a household network to which the Internet telephone apparatus of Fig. 5 is connected;
Fig. 7 is a block diagram showing a configuration in which the household network system of Fig. 2 is connected to the Internet telephone system; and
Fig. 8 is a table showing a part of a telephone directory in a storing portion of the Internet telephone apparatuses of Figs. 1 and 5.

### Best Mode for Carrying out the Invention

Now referring to the drawings, preferred embodiments of the invention are described below.

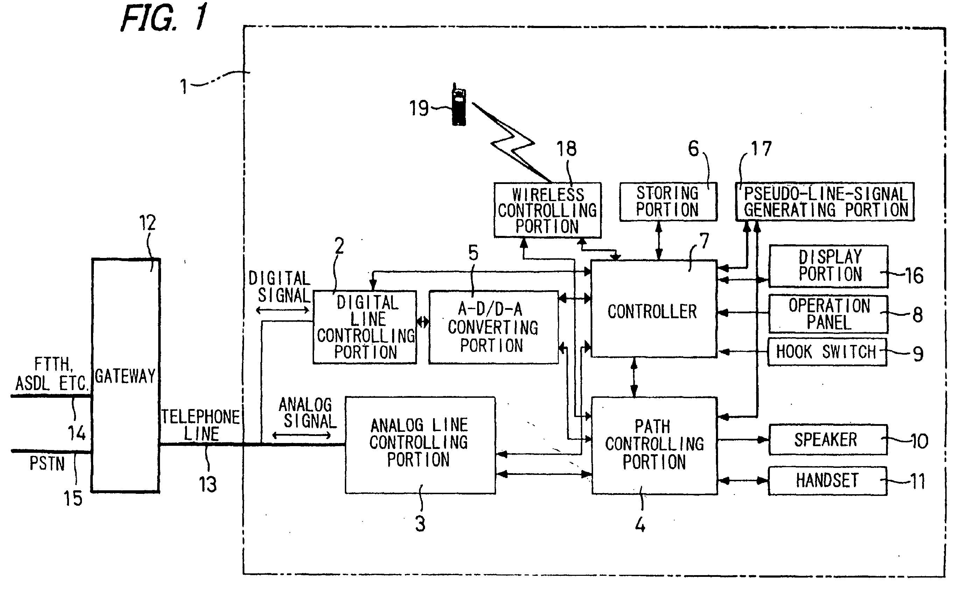

Fig. 1 shows a schematic electrical configuration of an Internet telephone apparatus 1 according to one embodiment of the invention. In this specification, "Internet" refers to not only so-called the Internet, which is a network spread worldwide, using TCP/IP, but also a network dedicated to an Internet telephone service. The Internet telephone apparatus 1 of this embodiment comprises a digital line controlling portion 2, an analog line controlling portion 3, a path controlling portion 4, and an analog-to-digital/digital-to-analog converting portion 5, a storing portion 6, a controller 7, an operation panel 8, a hook switch 9, a speaker 10 and a handset 11, and is connected to a gateway 12 by means of a modular cable of a telephone line 13. The modular cable of the telephone line 13 is a communication cable for HomePNA and forwards signals for analog telephone and signals for digital communications. The gateway 12 classifies signals for digital communications that are superposed in the telephone line 13 into those for an Internet connection line 14, for example, an optical fiber network such as FTTH (Fiber To The Home) or ADSL and those for a public telephone line 15 such as PSTN (Public Switched Telephone Network) and establishes a connection to the Internet network or the public telephone line network. The Internet telephone apparatus 1 further includes a display portion 16, a pseudo-line signal generating portion 17 and a wireless controlling portion 18, which is wireless controlling means. A slave apparatus 19 is connected to the wireless controlling portion 18 via wireless waves. The telephone line 13 connected to the Internet telephone apparatus 1 is not limited to that constituting HomePNA, but analog signals and digital signals are connected separately to an analog telephone line and LAN (Local Area Network) that allows Internet connection such as Ethernet, respectively.

The digital line controlling portion 2 shown in Fig. 1 performs a process of capturing and releasing a line when being used as an Internet telephone with digital signals, a process of detecting a ringing signal, a process of generating a selection signal at the time of sending a call, and the like. The analog line controlling portion 3 performs, as analog telephone means, a process of capturing and releasing a line when being used as an analog telephone, a process of detecting a ringing signal, a process of generating a selection signal at the time of sending a call, and the like. The path controlling portion 4 is a circuit for controlling a sound path for sent or received speech as telephone processing means, and connects line input and output to the handset 11, the speaker 10 for a hand-free phone or the slave apparatus 19 connected via the wireless controlling portion 18, using, for example, a crosspoint switch. The analog-to-digital/digital-to-analog converting portion 5 converts mutually between analog signals and digital signals when the apparatus is used as an Internet telephone. When sending a voice, voice signals input to a telephone transmitter of the handset 11 are analog/digital-converted by the analog-to-digital/digital-to-analog converting portion 5, to convert analog signals to digital signals. When receiving a voice, the digital signals input from the Internet connection line 14 are digital-analog converted to analog signals. The digital line controlling portion 2 and the analog-to-digital/digital-to-analog converting portion 5 function as Internet telephone means. The storing portion 6 stores telephone directory data, data for automatic line selection such as one called ACR (Auto Cost Routing), a call history and the like.

The controller 7 includes CPU and ROM in which programs are previously stored, and controls the entire Internet telephone apparatus 1, in particular, functions as line selecting means for selecting between the Internet line via the Internet network and the analog line only via the public telephone line network. The operation panel 8 is provided with a dial key, a hand-free phone button, a hold button and the like, in which various operations involved in telephone communications are entered. The hook switch 9 switches the off-hook state and the on-hook state, depending on whether or not the handset 11 is in place. The speaker 10 is provided for hand-free phone or for supplying audio output for call arrival melodies. The handset 11 is used for ordinary telephone speeches and provided with a telephone receiver and the telephone transmitter. The operation panel 8, the hook switch 9 and the handset 11 constitute telephone operating means.

The gateway 12 connects a public line such as PSTN or ADSL and a telephone line (network) in a house and converts the protocol of the household network such as HomePNA and the protocol of ADSL or the like, ensures security, control and manages the household network, and the like. The display portion 16 displays an operation guide, the line status, information on an input number, the content of the telephone directory when it is used, or the like. The pseudo-line signal generating portion 17, which is the pseudo-line signal generating means, generates a ringing signal (or melody) and also generates a pseudo-dial tone, a pseudo-ring back tone, a pseudo-busy tone, a hold sound for notifying a user, who is an operator, of the line status, when the apparatus is used as an Internet telephone. When the apparatus is used as an analog telephone, these notifying sounds are supplied from the public telephone line network when the apparatus is used as an analog telephone. The user can know the line status or the like by the same sounds as in an analog telephone when the Internet telephone is utilized. However, when these sounds are not the same, the sounds can notify that these sounds are concerned with the Internet telephone.

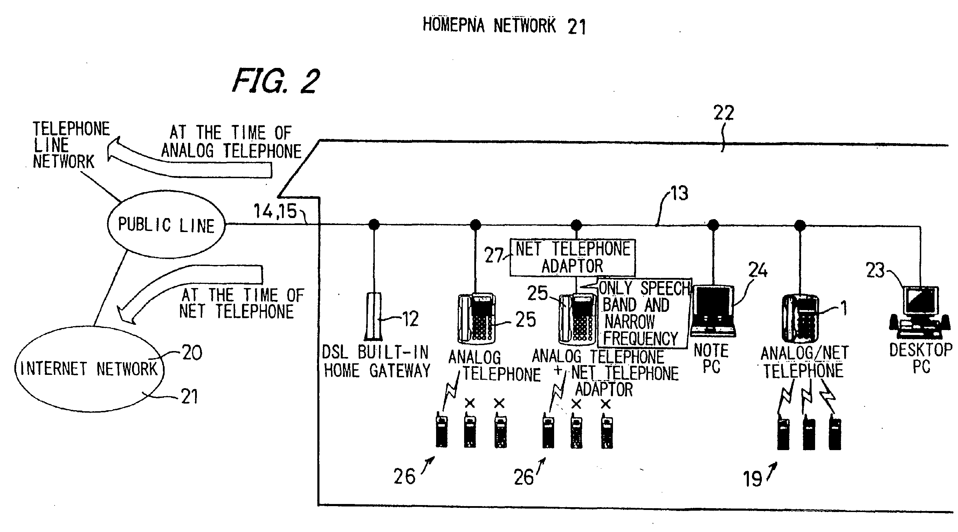

Figs. 2, 3, and 4 show an embodiment in which the Internet telephone apparatus 1 of Fig. 1 is connected to a household LAN and connected to an Internet network 20 so as to make an Internet telephone available. In Fig. 2, the Internet telephone apparatus 1 is directly connected to a HomePNA network 21 that utilizes the telephone line 13 as a communication cable. The HomePNA network 21 forms a LAN in a house 22, so that a desk top PC (Personal Computer) 23 or a notebook PC 24 can be connected thereto.

A conventional analog telephone 25 can be connected to the telephone line 13. A slave apparatus 26 can be connected to the analog telephone 25. However, in order to utilize the analog telephone 25 as an Internet telephone, the analog telephone has to be connected via a net telephone adaptor 27. In the connection via the net telephone adaptor 27, only the voice band is used, so that a band that can be used for data communications is narrow. Even if a plurality of slave apparatuses 26 can be used with the analog telephone 25 as a master apparatus, the band is narrow, so that simultaneous telephone communications using the plurality of slave apparatuses 26 cannot be performed. In the Internet telephone apparatus 1 of this embodiment, digital signals of the Internet telephone can use a wide band, and an analog telephone also can be used at the same time, so that telephone communications with a plurality of lines can be performed using a plurality of slave apparatuses 19.

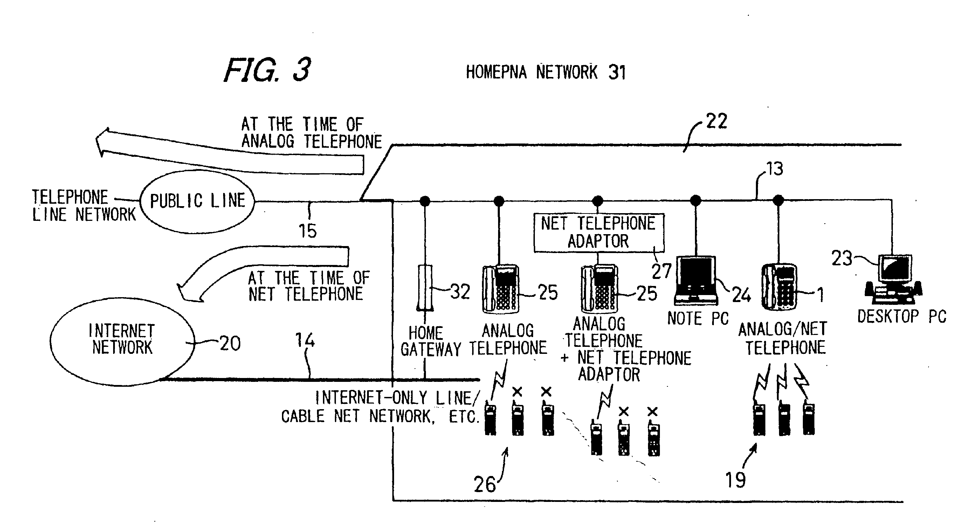

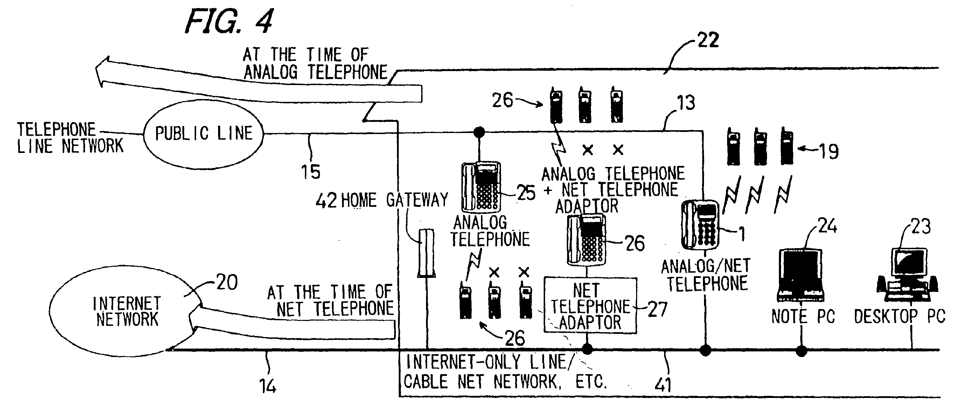

In HomePNA network 31 shown in Fig. 3, the Internet connection line 14 and the public telephone line 15 are divided by a home gateway 32, and a connection to the Internet network 20 is established via the Internet connection line 14. A data network 41 shown in Fig. 4 is used only for data communications and connected to the Internet network 20 via a home gateway 42 and the Internet connection line 14. The analog telephone is connected to the public line through the telephone line 13 via the public telephone line 15.

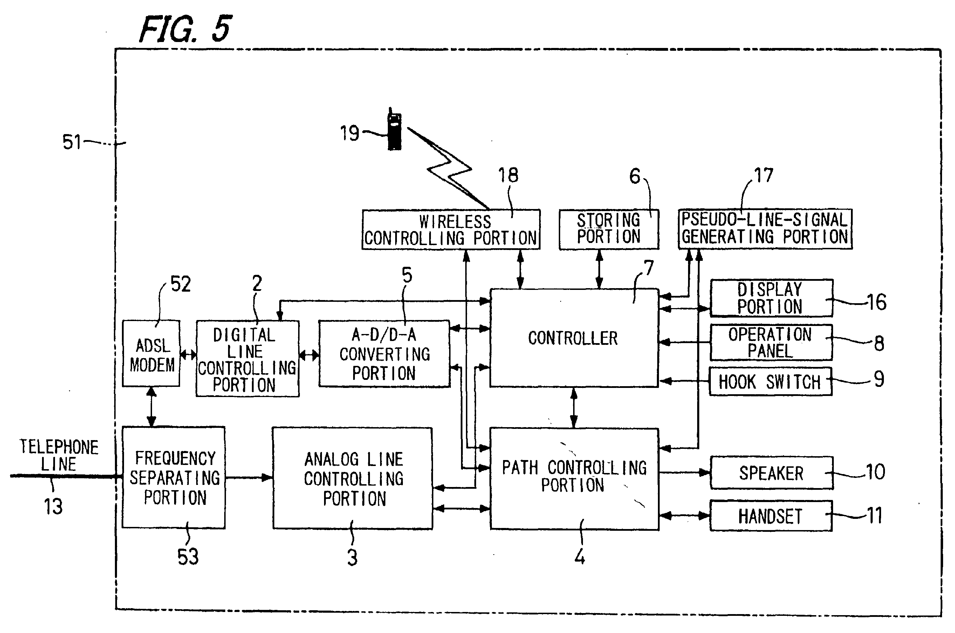

Fig. 5 shows a schematic electrical configuration of an Internet telephone apparatus 51 according to another embodiment of the invention. In this embodiment, the elements corresponding to those in the embodiment of Fig. 1 bear the same reference numerals. This embodiment uses ADSL as the Internet connection line 14, and includes an ASDL modem 52 included in the gateway 12 of Fig. 1 and a frequency separating portion 53, which is frequency separating means so as to form on unit. The ADSL modem 52 modulates digital signals to be sent, and demodulates received signals to digital signals. The frequency separating portion 53 separates the signals from the ADSL line into signals of a frequency band for speech communications and signals of a frequency band for data communications, depending on the frequency band. In other words, the ADSL modem 52 modulates digital signals to be sent to signals of a frequency band for data communications, and demodulates the signals of a frequency band for data communications separated by the frequency separating portion 53 to digital signals. In the ADSL line, an existing analog telephone line is used, and digital signals are sent using a frequency band higher than the frequency band of up to about 4 kHz for speech communications, so that separation is necessary on both sides of the central telephone office and the user.

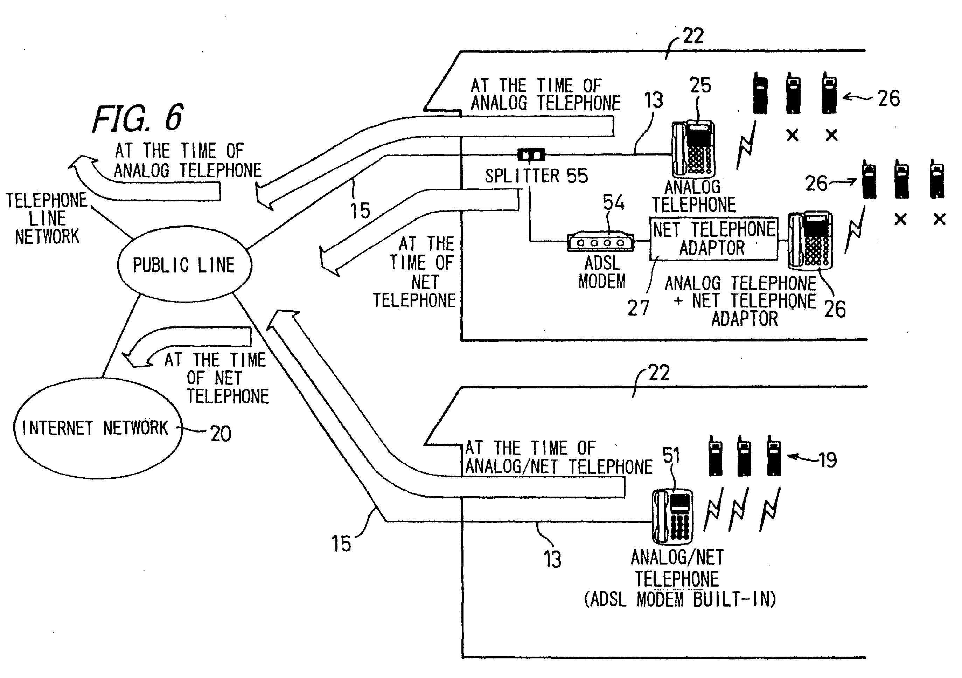

Fig. 6 shows the state in which the Internet telephone apparatus 51 shown in Fig. 5 is provided in a house 22 in comparison with the state in which the conventional analog telephone 25 is provided. When no other equipment is provided in the house 22, the Internet telephone apparatus can be connected to the telephone line in the same manner as in an analog telephone apparatus by allowing the frequency separating means and the ADSL modem to be included in the side of the telephone apparatus, and the connection can be simplified. When it is assumed that no other communication equipment is connected and an Internet telephone that also functions as an analog telephone is used, there is no need of using the net telephone adaptor 27. Therefore, the apparatuses to be included are only the ASDL modem 54 and a splitter 55. The Internet telephone apparatus 51 of Fig. 5 includes the ASDL modem 52 and the frequency separating portion 53 corresponding to the splitter 55. In ADSL, digital signals that are modulated to signals of a frequency band for data communications are sent using a frequency band higher than the frequency band for speech communications of up to about 4 kHz that is used for an ordinary analog telephone line. The frequency band for data communications can be defined according to ITU-T Recommendation G.992.1 (G.dmt) or ITU-T Recommendation G.992.2 (G.lite), but is not limited thereto, and any frequency band that can be used in ADSL can be used and a frequency band of 80 kHz or more can be used.

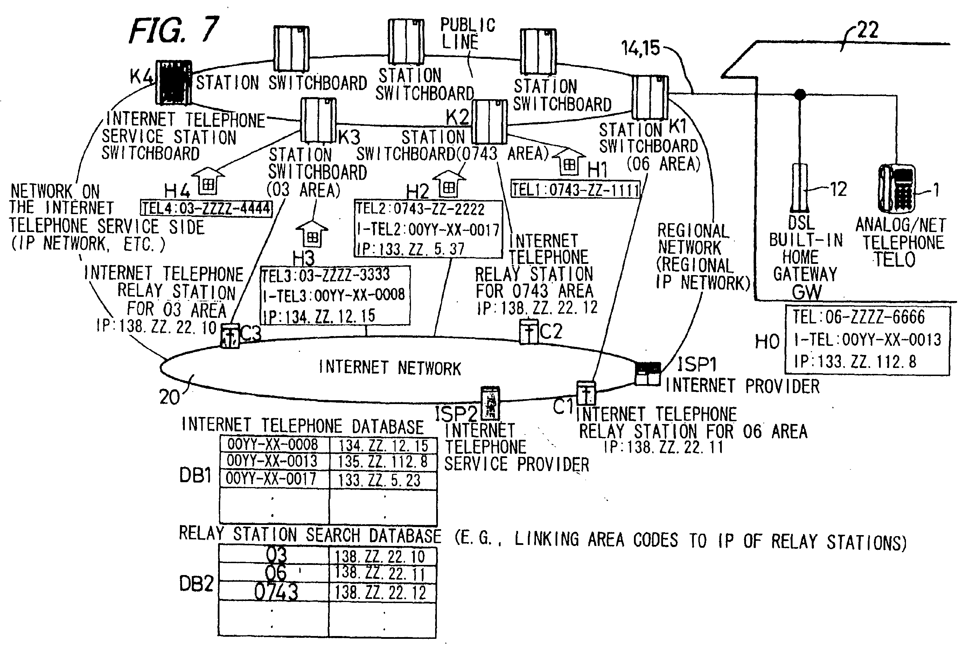

Fig. 7 shows a system configuration on the side of the Internet connection line 14 and the public telephone line 15 and the side of the Internet network 20 that are public lines involved when the Internet telephone communications are performed by the Internet telephone apparatus 1 connected as shown in Fig. 2. The Internet telephone apparatus 1 is supplied previously with a telephone number TEL for use as an analog telephone, a telephone number I-TEL for use as an Internet telephone, and an IP address in the Internet. There is an Internet service provider ISP1 that provides Internet connection in the Internet network 20. An Internet telephone service provider ISP2 provides Internet telephone database DB1 and relay station search dada base DB2. The Internet telephone database DB1 links the telephone numbers for the Internet telephone and the IP addresses. The relay station search database DB2 links the IP addresses of the Internet telephone relay stations C1, C2, and C3 provided in a plurality of regions linked to area codes to the area codes.

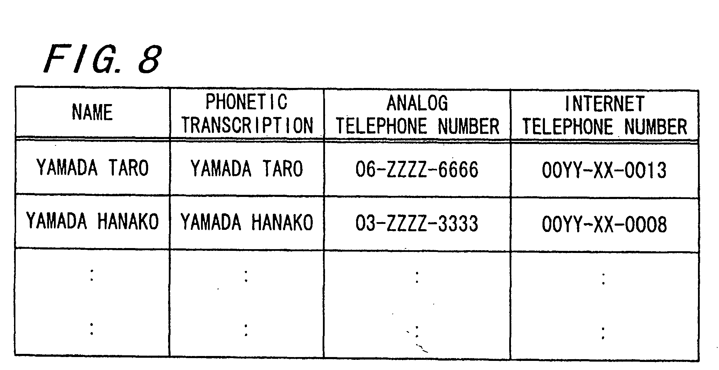

Fig. 8 shows an example of a telephone directory that is formed in the storing portion 6 in order to allow the apparatus to serve as both an analog telephone and an Internet telephone in the Internet telephone apparatuses 1 and 51 of the embodiments. The analog telephone number and the Internet telephone number are stored, corresponding to the name and the phonetic transcription thereof of the people to which a call may be directed. There is no need of having both the analog telephone number and the Internet telephone number.

Hereinafter, the operation of each portion when sending a call and receiving an incoming call, and talking on the phone with the Internet telephone apparatus 1 or 51 of the embodiments will be described.

### [Sending a call]

First, the case of sending a call as an Internet telephone will be described. When the handset 11 is picked up, the hook switch 9 is turned to an off-hook state. When the controller 7 detects the off-hook, the controller requests the gateway 12 through the digital line controlling portion 2 to check the network status. When the gateway 12 receives this request, the gateway 12 requests the Internet telephone service provider to which the user subscribed to establish a connection. When the connection to the Internet telephone service provider is established normally, the controller 7 instructs the pseudo-line signal generating portion 17 to generate a pseudo-dial tone. The generated pseudo-dial tone is sent to the telephone transmitter of the handset 11 through the path controlling portion 4 and turned into sounds. However, when the connection to the Internet telephone service provider cannot be established, the controller 7 instructs the pseudo-line signal generating portion 17 to generate a pseudo-busy tone. Instead of the pseudo-busy tone, other sound signals or synthetic sounds notifying impossibility of sending a call can be used. The generated busy tone is sent to the handset 11 through the path controlling portion 4 and informs the user, who is the operator, that a call cannot be sent.

When sending a call is possible, the operator is informed by the pseudo-dial tone that sending a call is possible, and enters the telephone number of another party (hereinafter, referred to as "targeted party") in the operation panel 8. The input of the telephone number can be simplified, for example, by designating the name of a targeted party from the telephone directory previously stored in the storing portion 6. The controller 7 instructs the digital line controlling portion 2 to send out the telephone number of the targeted party that is entered by the operator and the digital signals showing the telephone number are sent to the Internet telephone service provider via the gateway 12. The Internet telephone service provider provides database in which the correspondence relationship between the telephone number and the IP (Internet Protocol) addresses is recorded. The Internet telephone service provider searches the IP address of the targeted party based on the telephone number of a called party with reference to the database and notifies the calling party of the result. The Internet telephone apparatus 1 of the calling party reestablishes a connection with the notified IP address as the speech address so that the telephone of the targeted party rings.

The controller 7 instructs the pseudo-line signal generating portion 17 to generate a pseudo-ring back tone, while the telephone of the targeted party is ringing. The generated pseudo-ring back tone is sent to the handset 11 through the path controlling portion 4. The operator can be informed by the pseudo-ring back tone that the telephone is ringing. When the targeted party answered, the digital line controlling portion 2 notifies the controller 7 in response to a reply that the connection is established. The controller 7 instructs the pseudo-line signal generating portion 17 to stop generating the pseudo-ring back tone so that the pseudo-ring back tone stops being sent from the handset 11, which makes it possible to talk on the phone with the targeted party.

When the connection to the Internet telephone service provider cannot be established at the time of the off-hook, the controller 7 can switch the line to be used automatically to the analog line, so that a call can be sent on the analog line. In this case, the display portion 16 displays the fact that the automatic switching to the analog line has been performed to notify the operator. The controller 7 instructs the path controlling portion 4 to connect to the analog path and instructs the analog line controlling portion 3 to capture a line. When the analog line controlling portion 3 captures an analog line, a dial tone is sent to the handset 11 through the path controlling portion 4. The operator is informed by the dial tone that sending a call is possible, and enters the telephone number of a targeted party with the operation panel 8.

The controller 7 instructs the analog line controlling portion 3 to sent the telephone number entered by the operator in pulses or tones, depending on the preset line type of the analog line so that the telephone number is sent to the public telephone line 15 via the gateway 12. While the telephone of the targeted party is ringing, a ring back tone is sent from the public telephone line 15 to the handset 11 through the path controlling portion 4 so that the operator can be informed by the ring back tone that the telephone is ringing. When the targeted party answered, the ring back tone from the public telephone line 15 is stopped, and it becomes possible to talk with the targeted party.

Herein, when first the Internet telephone is selected and a connection to the Internet telephone service provider cannot be established, then the Internet line is switched to the analog line. However, it is possible to designate previously the line to be used, either the Internet line to the Internet network or the analog line, in the operation panel 8.

Furthermore, when a connection to the Internet telephone service provider is established at the time of the off-hook and the telephone number of the targeted party is entered, then a less expensive line can be selected automatically by comparing the charges between the Internet telephone and the analog telephone with reference to the call charge table of automatic line selection data such as ACR that are previously stored in the storing portion 6. In this case, the automatically selected line is displayed in the display portion 16 to inform the operator.

In the case of telephone communications by utilizing the Internet line, it is general to send a number that is different from the telephone number in the case of utilizing the analog line as the telephone number of a targeted party. After the operator enters the telephone number, the line to be used can be changed for some reasons. In this case, a normal connection can not be established with the telephone number that has been entered previously. In this case, the analog telephone number can be searched automatically based on the Internet telephone number with reference to the telephone directory stored in the storing portion 6, and sent out, or vice versa.

In the above description, it is assumed that in the case of utilizing the Internet line, the number of a targeted party is that for the Internet telephone, but the analog telephone number can be designated so that the Internet is used all the way up to the Internet telephone relay station nearest to the targeted party, and from the Internet telephone relay station to the targeted party, the analog line is used.

As described above, in sending a call through the Internet telephone, the following generally is performed. The telephone number of a targeted party is sent to the Internet telephone service provider, and the Internet telephone service provider searches the IP address of the called party based on the telephone number of the called party, and notifies the calling party. The calling party reconnects to the targeted party of the notified IP address and talking can start. However, in the case where the IP address of the targeted party is a fixed address and is known beforehand, if the IP address of the targeted party is stored in the telephone directory stored in the storing portion 6, corresponding to the telephone number for analog telephone of the targeted party. then, calling the targeted party can be performed directly without inquiring the IP address of the targeted party of the Internet telephone service provider for every occasion of sending a call.

### [Receiving an incoming call]

In the case where there is an incoming call via the Internet connection line 14 from the Internet network, the call is detected by the digital line controlling portion 2 and the controller 7 is notified. Although digital signals indicating an incoming call are input to the analog line controlling portion 3, the analog line controlling portion 3 cannot identify digital signals and does not react. The notified controller 7 instructs the pseudo-line signal generating portion 17 to generate a ringing sound. The generated ringing sound is supplied to the speaker 10 via the path controlling portion 4. When the handset 11 is picked up in this state, the hook switch 9 becomes in the off-hook. When the controller 7 detects the off-hook, the controller instructs the digital line controlling portion 2 to send out a response signal and when a connection to the targeted party is established, it becomes possible to talk on the telephone.

When a call comes from the public telephone line 15, the call is detected by the analog line controlling portion 3, and the controller 7 is notified of the call. In this case, the digital line controlling portion 2 cannot identify analog signals and does not react. The notified controller 7 instructs the pseudo-line signal generating portion 17 to generate a ringing sound. The generated ringing sound is supplied to the speaker 10 via the path controlling portion 4. When the handset 11 is picked up in this state, the hook switch 9 becomes in the off-hook. When the controller 7 detects the off-hook, the controller instructs the analog line controlling portion 3 to capture a line and when a connection to the targeted party is established, it is becomes possible to talk on the phone.

As described above, when the speaker 10 receives an incoming call from the Internet line or the analog line, the speaker makes a ringing sound audible and outputs the ringing sound. When a call from the Internet line and a call from the analog line can be distinguished by the ringing sound generated in the pseudo-line signal generating portion 17, the user can determine the type of the line based on the sound. In this case, the pseudo-line signal generating portion 17 functions as means for notifying the line of an incoming call.

### [Talking on the telephone]

When the apparatus is used as an analog telephone, voice signals from the public telephone line 15 are made audible by the telephone receiver of the handset 11 or, the speaker 10 and reach the operator via the analog line controlling portion 3 and the path controlling portion 4. When the apparatus is used as an Internet telephone, voice signals from the Internet connection line 14 are analog-converted by the analog-to-digital/digital-to-analog converting portion 5, and then are made audible by the telephone receiver of the handset 11 or the speaker 10 and reach the operator via the path controlling portion 4, and via the line controlling portion 3 and the path controlling portion 4. Similarly, the speech of the operator input from the telephone transmitter of the handset 11 is sent to the public telephone line 15 as it is from the path controlling portion 4 through the analog line controlling portion 3 when the apparatus is used as an analog telephone. When the apparatus is used as an Internet telephone, the speech is sent from the path controlling portion 4 and converted to digital signals by the analog-to-digital/digital-to-analog converting portion 5, and then sent to the Internet connection line 14 through the digital line controlling portion 2.

### [Receiving an incoming call during talking on a telephone]

In the case of utilizing the Internet line, two or more lines can be utilized at the same time, and further the public telephone line 15 also can be utilized at the same time. Therefore, while talking on the Internet telephone, the apparatus can receive an interrupting call from an Internet telephone different from that Internet telephone or an analog telephone or can receive an interrupting call of an Internet telephone during talking on an analog telephone.

During talking on an Internet telephone, voice data are sent and received in one engaged line, and at the same time, other information can be received by the digital line controlling portion 2. During talking on the phone, the display portion' 16 displays whether the engaged line is for analog telephone or Internet telephone, and displays the telephone number or the name of a person with whom the operator is talking. When there is another incoming call during talking on the phone, a ringing signal is received by the digital line controlling portion 2 or the analog line controlling portion 3, and the controller 7 is notified of the call. The controller 7 displays an interrupting call on the display portion 16 as means for notifying an incoming call during talking on a phone with a message, or the telephone number or the name of the person that interrupted, and instructs the pseudo-line signal generating portion 17 to generate an interrupting signal sound. The interrupting signal sound generated by the pseudo-line signal generating portion 17 as the means for notifying an incoming call during talking on an Internet telephone or means for notifying during talking on an analog telephone in response to an instruction is sent to the handset 11 through the path controlling portion 4.

The operation panel 8 is provided with a speech switching switch to be used when there is an interrupting call during talking on a telephone. This speech switching switch allows a switching operation when there is an interrupting call during talking on a telephone in the same manner as a service called "Catchphone" provided by NTT Corporation. When there is an interrupting analog telephone call during talking on the Internet telephone, or when there is an interrupting Internet telephone call during talking on the analog telephone, if the operator switches the speech switching switch, the controller 7 instructs the pseudo-line signal generating portion 17 to generate a hold sound. The hold sound generated in response to the instruction is sent to the Internet line via the path controlling portion 4 and via the analog-to-digital/digital-to-analog converting portion 5 and the digital line controlling portion 2 in the case of talking on the Internet telephone. At the same time, the path to be connected to the handset 11 is switched from the Internet line controlling portion 2 to the analog line controlling portion 3 by the path controlling portion 4. Thus, it becomes possible to talk on the analog line thereafter. In the case of talking on the analog telephone, the hold sound is sent to the public telephone line 15 via the path controlling portion 4 and then the analog line controlling portion 3. At the same time, the path to be connected to the handset 11 is switched from the analog line controlling portion 3 to the digital line controlling portion 2 by the path controlling portion 4. Thus, it becomes possible to talk on the Internet line thereafter.

The Internet telephone is data communications using audio packets, and therefore it is possible to talk with a plurality of lines at the same time. Therefore, another Internet telephone call can come in during talking on an Internet telephone. In this case, the controller 7 instructs the pseudo-line signal generating portion 17 to generate a hold sound, and the hold sound is sent in the form of an audio packet to the person with which the operator has been talking, and the audio packet of the call from the person that interrupted is supplied to the telephone receiver of the handset 11 via the digital line controlling portion 2, the analog-to-digital/digital-to-analog converting portion 5 and the path controlling portion 4, and is made audible. The speech input to the telephone transmitter of the handset 11 is sent in the form of audio packets to the person that interrupted via the path controlling portion 4, the analog-to-digital/digital-to-analog converting portion 5 and the digital line controlling portion 2.

### [Status display during talking on a telephone]

The telephone numbers or the names of a person with whom the operator is talking, a person that interrupted during talking on a telephone, and a person who is on hold when there was an interrupting call and switching was performed are all displayed on the display portion 16. The statuses such as "Talking", "On hold", or "Interruption" are displayed, and different colors for each status are used for clarification. In particular, for clarification, the person with whom the operator is talking can be displayed with larger letters, or the indication can be flashed.

### [Simultaneous multiple conversations]

As described above, in the Internet telephone apparatus 1 or 51 of the invention, two or more lines can be used simultaneously. Connections to a plurality of parties can be established, and conversations from the telephone transmitter of the handset 11 are sent in the form of audio packets to all the connected party via the Internet line. It is possible to talk to a party connected on the analog line at the same time. All the audio packets from the all the connected parties on the Internet are analog-converted, synthesized, and then supplied to the handset 11. When there is a party to be connected by an analog line, a speech received from the public telephone line 15 is made audible by the handset 11 so that the voices from all the connected parties can be heard simultaneously.

Furthermore, an audio packet received from each IP address of all the connected parties is sent to a different IP address, or is analog-converted and sent to the public telephone line 15, and the voice input from the public telephone line 15 is sent to all the IP addresses of all the connected parties on the Internet line, so that the content of the talk can be shared with all the connected conversation partners. In other words, simultaneous talk with all the connected conversation partners is possible.

### [Simultaneous utilization of a plurality of lines]

As described above, in the Internet telephone, connections to a plurality of lines can be established. When two or more slave apparatuses 19 are connected by the wireless controlling portion 18, the path controlling portion 4 is configured to include paths for the main portion of the Internet telephone apparatus 1 or 51 and all the slave apparatuses 19. In other words, the path controlling portion 4 is provided with a path for communications via the handset 11, and paths in the number equal to the number of the slave apparatuses 19 for communications from the slave apparatuses 19 via the wireless controlling portion 18. Thus, the main portion and the plurality of slave apparatuses 19 can communicate with different party simultaneously on the telephone. The conversation partners have different IP addresses from each other. Calling a conversation partner is performed by designating the IP address, as described above. Therefore, when for the master apparatus and each slave apparatus 19, connections to corresponding targeted party are established, the main portion and the plurality of the slave apparatuses 19 can communicate with different parties simultaneously.

### [Difference from conventional techniques]

Conventionally there has been facsimile apparatuses that can switch between the analog line and the Internet line. However, the invention is directed to telephone apparatuses, which have inherently different functions from those of facsimile apparatuses. Furthermore, the invention is also different from the conventional techniques in that operators determines the line status based on the sounds of the line, so that the invention performs a process of informing the operator of the line status by simulating the line to produce a pseudo-dial tone, a pseudo-ring back tone, a pseudo-busy tone or the like.

Moreover, when an analog telephone 25 is connected to an net telephone adaptor 27, the telephone can be used as an Internet telephone. However, when the net telephone adaptor 27 is used, a connection to the analog telephone 26 results in one analog line, and cannot realize "simultaneous multiple communications" or "simultaneous utilization of a plurality of lines", as described above. In the invention, telephone apparatuses are also incorporated in a digital network by utilizing the HomePNA network 21 or 31 as shown in Fig. 2 or 3, so that "simultaneous multiple communications" and "simultaneous utilization of a plurality of lines" are realized. The network is not limited to the HomePNA, but LAN with the analog telephone line 13 and the digital network 41 such as Ethernet as shown in Fig. 4 also can be used to realize "simultaneous multiple communications" and "simultaneous utilization of a plurality of lines".

Hereinafter, an example of placing a call/receiving a call of a telephone using the Internet telephone apparatus 1 with the configuration of the Internet telephone system as shown in Fig. 7 will be described. In this example, a household network is formed with HomePNA, and ADSL is used to connect the house and the Internet network 20 via a regional IP network. Ethernet can be used for the household LAN environment. The connection between the house and the Internet network 20 can be established in various forms such as using a dedicated line or CATV (Cable Antenna Television). The following process of placing a call/receiving a call in the Internet telephone service is only an example, and the process is not limited to the procedure described below. ADSL is the most widely spread system of the xDSL systems that allow data of several M bits/sec to be sent and received with an existing telephone line, and other systems can be used.

### [Placing a call]

### <1> Placing a call to an analog telephone number in the analog telephone mode (TEL0 → TELL: calling number 0743-ZZ-1111)

Placing a call to an analog telephone number in the analog telephone mode is performed as follows.
1. TEL0 in a house H0 is off-hooked.
2. Dialing is performed with the TEL0.
3. TEL1 in a house H1 of the targeted party rings through a station switchboard K1 in the 06 area and a station switchboard K2 in the 0743 area in a public line network.
4. The TEL1 is off-hooked.
5. An analog connection is established between the TEL0 and the TEL1 so as to allow talking on the phone.
6. The line is disconnected by on-hooking the TEL0 or the TEL1.

### <2> Placing a call to an Internet telephone number in the analog telephone mode (TEL0 → I-TEL2: calling number 00YY-XX-0017)

Placing a call to an Internet telephone number in the analog telephone mode is performed as follows.
1. TEL0 in a house H0 is off-hooked.
2. Dialing is performed with the TEL0.
3. A call is connected to an Internet telephone service station switchboard K4 via a station switchboard K1 in the 06 area in a public line network.
4. The Internet telephone service station switchboard K4 inquires the IP address of "00YY-XX-0017" of the dial destination of an Internet telephone service provider ISP2.
5. The Internet telephone service provide ISP2 obtains the IP address with reference to an Internet telephone database DB1 and sends back the results to the Internet telephone service station switchboard K4.
6. The Internet telephone service station switchboard K4 makes a request for Internet telephone connection to the obtained IP address so that I-TEL2 rings.
7. The I-TEL2 is off-hooked.
8. An analog connection is established between the TEL0 and the Internet telephone service station switchboard K4, and an Internet connection is established between the Internet telephone service station switchboard K4 and the I-TEL2 so as to allow talking on the phone. (Analog/digital conversion and digital/analog conversion are performed in the Internet telephone service station switchboard K4.)

### <In the case of disconnection by the TEL0>

The line between the TEL0 and the Internet telephone service station switchboard K4 is disconnected by on-hooking the TEL0.

The Internet telephone service station switchboard K4 cuts the Internet connection to the I-TEL2.

### <In the case of disconnection by the I-TEL2>

The Internet telephone connection between the Internet telephone service station switchboard K4 and the I-TEL2 is cut by on-hooking the I-TEL2.

The Internet telephone service station switchboard K4 disconnects the line with the TEL0.

### <3> Placing a call to an analog telephone number in the Internet telephone mode (TEL0 → TEL4: calling number 03-ZZZZ-4444)

Placing a call to an analog telephone number in the Internet telephone mode is performed as follows.
1. TEL0 in a house H0 is off-hooked.
2. Dialing is performed with the TEL0.
3. The TEL0 inquires the IP address of a relay station for connection to "03" of an Internet telephone service provider ISP2 via a DSL built-in home gateway GW.
4. The Internet telephone service provider ISP2 obtains the IP address of the relay station with reference to an Internet relay station search database DB2 and notifies the TEL0.
5. The TEL0 notifies an Internet telephone relay station C3 for the 03 area, which is a relay station of the obtained IP address, of a calling number "03-ZZZZ-4444" and makes a request for Internet telephone connection.
6. The Internet telephone relay station C3 for the 03 area rings the TEL4 via the station switchboard K3 for the 03 area in the public line network.
7. The TEL4 is off-hooked.
8. An Internet connection is established between the TEL0 and the Internet telephone relay station C3 for the 03 area, and an analog connection is established between the Internet telephone relay station C3 for the 03 area and the TEL4 so as to allow talking on the phone. (Analog/digital conversion and digital/analog conversion are performed in the Internet telephone relay station C3.)

### <In the case of disconnection by the TEL0>

The Internet telephone connection between the TEL0 and the Internet telephone relay station C3 for the 03 area is cut by on-hooking the TEL0.

The Internet telephone relay station C3 for the 03 area cuts the line connection to the TEL4.

### <In the case of disconnection by the TEL4>

The line between the Internet telephone relay station C3 for the 03 area and the TEL4 is disconnected by on-hooking the TEL4.

The Internet telephone relay station C3 for the 03 area cuts the Internet telephone connection to the TEL0.

### <4> Placing a call to an Internet telephone number in the Internet telephone mode (TEL0 → I-TEL3: calling number 00YY-XX-0008)

Placing a call to an Internet telephone number in the Internet telephone mode is performed as follows.
1. TEL0 in a house H0 is off-hooked.
2. Dialing is performed with the TEL0.
3. The TEL0 inquires the IP address of "00YY-XX-0008" of an Internet telephone service provider ISP2 via a DSL built-in home gateway GW.
4. The Internet telephone service provider ISP2 obtains the IP address of the I-TEL3 with reference to an Internet telephone database DB1 and notifies the TEL0.
5. The TEL0 makes a request for Internet telephone connection to the obtained IP address so that I-TEL3 rings.
6. The TEL3 is off-hooked.
7. An Internet connection is established between the TELO and the I-TEL3 so as to allow talking on the phone.
8. The Internet telephone connection is cut by on-hooking the TEL0 or the I-TEL3.

### Industrial Applicability

As described above, according to the invention, an Internet telephone apparatus capable of telephone communications via an Internet line laid utilizing the Internet includes the telephone operating means and the telephone processing means in common, and can select the line type with the line selecting means such that telephone communications are performed via an analog line laid in a public telephone line network with the analog telephone means, and telephone communications are performed via an Internet line with the Internet telephone means. The user of the Internet telephone apparatus can perform telephone communications using the same telephone apparatus whether the Internet line is utilized or the analog line is utilized. Therefore, only a small installation space is required, and both telephone communications can be performed with a common operation that is performed to the telephone operating means. This results in good convenience in use.

According to the invention, the line type is selected in accordance with a calling destination and a line status, so that telephone communications can be performed on an appropriate line type without the user selecting directly the line type.

According to the invention, the line type is notified so that the user can know easily which of the lines is in use for telephone communications.

According to the invention, when the line type is selected, a targeted party previously stored in the targeted-party-registering means can be selected in accordance with the selected line type, so that the user can select easily a targeted party.

According to the invention, an appropriate response can be performed in accordance with the line type in which a call has arrived, whether the call has arrived from the analog line or from the Internet line.

According to the invention, the line type having a call receiving request is notified, and therefore the user can know easily which line had a call receiving request.

According to the invention, even during communications via the analog telephone, the user can know easily that the user is wanted by the Internet telephone.

According to the invention, even during communications via the Internet telephone, the user can know easily that the user is wanted by the analog telephone or the Internet telephone.

According to the invention, when another call has arrived during talking on the phone, the line type is selected such that the incoming call is responded to. Therefore, a large number of calls for telephone communications can be performed without imposing operation burden on the user.

According to the invention, the apparatus can be connected to a plurality of lines, using only the Internet telephone means or the Internet telephone means and the analog telephone means, so that simultaneous telephone communications with a plurality of targeted party can be performed.

The plurality of lines are connected to each other, so that for example, the master apparatus and the slave apparatus can perform telephone communications with different targeted party at the same time.

According to the invention, the Internet telephone apparatus can be connected to the telephone line in the same manner as in the analog telephone apparatus by including the frequency separating means and the ADSL modem in the telephone apparatus. Thus, connection can be simplified.

According to the invention, when the Internet telephone is used, the operator can know the line status with the same sound as in the case of the analog telephone.

According to the invention, the operator can know by the pseudo-dial tone that a call can be sent.

According to the invention, the operator can know by the pseudo-busy tone that a call cannot be sent.

According to the invention, the operator can know by the sound indicating impossibility of sending a call that a call cannot be sent.

According to the invention, the operator can know by the pseudo-ring back tone that the telephone of the targeted party is ringing.

According to the invention, the operator can know by the stop of the pseudo-ring back tone that the telephone of the targeted party is answered.

According to the invention, the Internet telephone apparatus and one or a plurality of slave apparatuses can perform simultaneous telephone communications with different targeted party via a path for communications via the telephone operating means and a path in the number equal to the number of the slave apparatus for communications from the slave apparatus via the wireless control means.

According to the invention, Internet telephone communications can be performed by the same telephone operation as the operation of analog telephone communications. The database provided by an Internet telephone service provider can be utilized, and therefore telephone communications via the Internet line can be performed efficiently, which may reduce the communication cost.

According to the invention, when the Internet telephone apparatus is connected to a subscriber line from the public telephone line network, the Internet line can be utilized via the public telephone line network, or the analog line can be utilized with only public telephone line network.

According to the invention, Internet telephone communications can be performed by utilizing the Internet network efficiently.

According to the invention, the targeted party with whom the Internet telephone communications are performed is connected by utilizing the Internet network and the public telephone line network so that telephone communications can be performed, efficiently.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and the range of equivalency of the claims are therefore intended to be embraced therein.

## Claims

1. An Internet telephone apparatus (1, 51) capable of telephone communications via an Internet line laid utilizing an Internet, comprising:
telephone operating means (8, 9, 11) for receiving an input operation at a time of telephone communications;
telephone processing means (4) for processing a voice signal for telephone communications;
analog telephone means (3) for sending and receiving the voice signal processed by the telephone processing means (4) in a form of an analog signal to an analog line in order to perform telephone communications via the analog line laid in a public telephone line network according to an input operation to the telephone operating means (8, 9, 11);
Internet telephone means (2, 5) for converting the voice signal processed by the telephone processing means (4) to a digital signal of a predetermined form and sending and receiving the digital signal to an Internet line in order to perform telephone communications via the Internet line according to an input operation to the telephone operating means (8, 9, 11); and
line selecting means (7) for selecting a line type between the analog line and the Internet line, and selecting the analog telephone means (3) or the Internet telephone means (2, 5) according to the selected line type.

2. The Internet telephone apparatus (1, 51) of claim 1, wherein the line selecting means (7) selects either the analog line or the Internet line in the selection of the line type in accordance with a calling destination and a line status.

3. The Internet telephone apparatus (1, 51) of claim 2, further comprising selection-line-notifying means for notifying a user of a line type selected by the line selecting means (7).

4. The Internet telephone apparatus (1, 51) of claim 1, further comprising targeted-party-registering means for registering previously targeted party for telephone communications separately for the Internet line and the analog line,
wherein the line selecting means (7) selects either the analog line or the Internet line in the selection of the line type based on the input operation to the telephone operating means (8, 9, 11) at a time of placing a call, and can select a targeted party corresponding to the selected line type from the previously registered targeted party in the targeted-party-registering means.

5. The Internet telephone apparatus (1, 51) of any one of claims 1 to 4, wherein the line selecting means (7) selects such that the analog telephone means (3) responds to an incoming call from the analog line, and the Internet telephone means (2, 5) responds to an incoming call from the Internet line.

6. The Internet telephone apparatus (1, 51) of any one of claims 1 to 5, further comprising incoming-call-line-notifying means (17) for determining whether a call receiving request has come from the analog line or the Internet line at a time when a call has arrived, and notifying a user of a result.

7. The Internet telephone apparatus (1, 51) of any one of claims 1 to 6, further comprising means for notifying an incoming call during talking on the analog telephone (17) that can receive a call that has arrived from the Internet line during talking via the analog line with the analog telephone means (3) and that, if a call has arrived, notifies the user of the call.

8. The Internet telephone apparatus (1, 51) of any one of claims 1 to 7, further comprising means for notifying an incoming call during talking on the Internet telephone (17) that can receive a call that has arrived from the analog line or the Internet line during talking via the Internet line with the Internet telephone means (2, 5) and that, if a call has arrived, notifies the user of the call.

9. The Internet telephone apparatus (1, 51) of any one of claims 1 to 6, further comprising incoming-call-detecting means for detecting another incoming call during talking on a phone, wherein
the line selecting means (7) selects the line type such that when the incoming-call-detecting means detects another incoming call, the incoming call is responded to.

10. The Internet telephone apparatus (1, 51) of claim 1, wherein the line selecting means (7) selects the analog telephone means (3) and the Internet telephone means (2, 5) or the Internet telephone means (2, 5) so that the Internet telephone apparatus can be connected to a plurality of lines at the same time.

11. The Internet telephone apparatus (1, 51) of claim 10, wherein the analog telephone means (3) and the Internet telephone means (2, 5) can connect the plurality of lines each other to which the Internet telephone apparatus can be connected.

12. The Internet telephone apparatus (51) of claim 1, further comprising:
frequency separating means (53) for separating signals from ADSL (Asymmetric Digital Subscriber Line) into a signal of a frequency band for speech communications and a signal of a frequency band for data communications depending on a frequency band, and
an ADSL modem (52) for modulating a digital signal to be sent to a signal of the frequency band for data communications, and demodulating the signal of the frequency band for data communications separated by the frequency separating means (53) to a digital signal.

13. The Internet telephone apparatus (1, 51) of any one of claims 1 to 12, further comprising pseudo-line signal generating means (17) for generating a ringing signal and generating a pseudo tone or signal for notifying an operator of a line status when being used as an Internet telephone.

14. The Internet telephone apparatus (1, 51) of claim 13, wherein the line selecting means (7) instructs the pseudo-line signal generating means (17) to generate a pseudo-dial tone when a normal connection to an Internet telephone service provider is established.

15. The Internet telephone apparatus (1, 51) of claim 13, wherein the line selecting means (7) instructs the pseudo-line signal generating means (17) to generate a pseudo-busy tone when a connection to an Internet telephone service provider cannot be established.

16. The Internet telephone apparatus (1, 51) of claim 13, wherein the line selecting means (7) instructs the pseudo-line signal generating means (17) to generate a sound indicating impossibility of sending a call when a connection to an Internet telephone service provider cannot be established.

17. The Internet telephone apparatus (1, 51) of claim 13, wherein the line selecting means (7) instructs the pseudo-line signal generating means (17) to generate a pseudo-ring back tone while a telephone of a targeted party is ringing.

18. The Internet telephone apparatus (1, 51) of claim 13, wherein the line selecting means (7) instructs the pseudo-line signal generating means (17) to stop generating a pseudo-ring back tone when a telephone of a targeted party is answered.

19. The Internet telephone apparatus (1, 51) of any one of claims 1 to 18, further comprising wireless control means (18) connected to one or a plurality of slave apparatuses (19) via a wireless wave,
wherein the telephone processing means (4) is provided with a path for communications via the telephone operating means (8, 9, 11) and a path in a number equal to the number of the slave apparatus (19) for communications from the slave apparatus (19) via the wireless control means (18).

20. An Internet telephone system comprising:
the Internet telephone apparatus (1, 51) of any one of claims 1 to 19, and
an Internet network (20) in which an Internet line is laid and that has an Internet telephone service provider (ISP2) for providing database (DB1, DB2) necessary for Internet telephone communications, wherein
the Internet telephone means (2, 5) of the Internet telephone apparatus (1, 51) performs Internet telephone communications based on the database (DB1, DB2) provided by the Internet telephone service provider (ISP2).

21. The Internet telephone system of claim 20, wherein the Internet telephone apparatus (1, 51) is connected to the Internet network (20) via a public telephone line network (15).

22. The Internet telephone system of claim 20, wherein the Internet telephone apparatus (1, 51) is connected to the Internet network (20) via a data communication network (41).

23. The Internet telephone system of any one of claims 20 to 22, wherein
a plurality of Internet telephone relay stations (C1, C2, C3) that are responsible for respective regions and relay telephone communications via the Internet line to the public telephone line network (15) are provided in the Internet network (20),
the Internet telephone service provider (ISP2) provides data for selecting the Internet telephone relay stations (C1, C2, C3) at a time of telephone communications via the Internet line in a form of the database (DB2), and
the Internet telephone means (2, 5) of the Internet telephone apparatus (1, 51) selects the Internet telephone relay stations (C1, C2, C3) corresponding to a targeted party with reference to the database (DB2) provided by the Internet telephone service provider (ISP2), and performs Internet telephone communications via the selected Internet telephone relay station (C1, C2, C3).
